# EUROPÄISCHE PATENTSCHRIFT

(11) **EP 2 600 005 B1**
(45) Veröffentlichungstag und Bekanntmachung des Hinweises auf die Patenterteilung: **04.05.2016**
(21) Anmeldenummer: 12192697.6
(22) Anmeldetag: 15.11.2012
(51) Int. Cl.: F04D 19/04, F04D 29/063, F04D 29/056, F16C 33/30, F16C 25/08, F16C 27/06

(54) **Vakuumpumpe mit einem käfiglosen Wälzlager**
Vacuum pump with a cage-free roller bearing
Pompe à vide avec palier à roulement sans cage

(30) Priorität: 01.12.2011 DE 102011119907
(43) Veröffentlichungstag der Anmeldung: 05.06.2013
(73) Patentinhaber: PFEIFFER VACUUM GMBH, 35614 Asslar (DE)
(72) Erfinder: Koci, Bernd, 35641 Schöffengrund (DE)
(74) Vertreter: Manitz, Finsterwald & Partner GbR

(56) Entgegenhaltungen:
- EP-A1- 0 446 723
- WO-A1-02/02957
- DE-A1- 19 729 450
- DE-A1-102007 033 905
- DE-A1-102009 052 180

## Beschreibung

Die Erfindung betrifft eine Vakuumpumpe mit einem Wälzlager nach dem Oberbegriff des Anspruchs 1, wie z.B. aus der DE 10 2009 052 180 A1 oder der WO 2006131694 A1 bekannt.

EP 0446723 A1 und DE 19729450 A1 offenbaren Vakuumpumpen mit käfiglosen Wälzlagern.

Vakuumpumpen nach molekularem oder turbomolekularem Wirkprinzip besitzen einen schnell drehenden Rotor. Die Drehzahl liegt im Bereich von einigen zehntausend Umdrehungen je Minute. Zur Lagerung des Rotors kommen Wälzlager zum Einsatz, wobei sowohl Fettschmierung als auch Schmiermittelumlaufschmierung verwendet werden.

Fettgeschmierte Wälzlager schaffen einen vorteilhaft einfachen Aufbau der Lagerung, jedoch sind die maximal zulässige Temperatur und die erreichbare Lebensdauer gegenüber der Umlaufschmierung begrenzt.

Die Umlaufschmierung bedeutet zwar eine Verbesserung in Bezug auf Lebensdauer und Einsatztemperaturen, ist jedoch komplizierter im Aufbau. Oftmals zielen in diesen Systemen die Verbesserungen auf die Schmiermittelführung ab. Die DE 10 2007 014 142 A1 schlägt beispielsweise vor, mittels einer gewindeartigen Nut auf einer Innenseite eines Käfigs einen Schmierfilm zwischen Innenring und Käfig zu schaffen.

Es war daher Aufgabe der Erfinder, eine Vakuumpumpe mit einem Wälzlager zu schaffen, welches die Lagerung des schnell drehenden Rotors der Vakuumpumpe verbessert.

Die Aufgabe wird gelöst durch die Merkmale der unabhängigen Ansprüche. Vorteilhafte Ausgestaltungen der Erfindung sind in den Unteransprüchen gekennzeichnet.

Das Wälzlager einer nach dem Hauptanspruch gestalteten Vakuumpumpe zeichnet sich aufgrund der Zahl der tragenden Kugeln durch eine hohe Tragzahl einerseits und aufgrund des Verzichts auf einen Käfig durch eine verringerte Reibung andererseits aus. Die verringerte Reibung reduziert die Lagertemperatur, wodurch der Verschleiß sinkt und die Schmierung verringert werden kann. Dies reduziert die Gefahr des Schmiermitteleintrags in den Unterdruckbereich der Vakuumpumpe und reduziert die Kosten. Die hohe Tragzahl ermöglicht den Einsatz eines Wälzlagers mit kleinen Abmessungen, was hohe Drehzahlen ermöglicht und Kosten reduziert. Zugleich wird durch den Verzicht auf einen Käfig eine Fehlerquelle beseitigt. Mit Hilfe der Gestaltung nach Anspruch 1 wurde es möglich, ein vollkugeliges Wälzlager für den Einsatz in Vakuumpumpen mit schnell drehendem Rotor zu schaffen und damit das Vorurteil zu überwinden, dass vollkugelige Wälzlager für hohe Drehzahlen aufgrund zu geringer Lebensdauer ungeeignet seien.

Die Merkmale der abhängigen Ansprüche verstärken die vorgenannten Vorteile und bringen zusätzliche Vorteile mit sich. Die Merkmale der Ansprüch 2, 3 und 5 stellen ein leicht montierbares Wälzlager vor. Der Innenring und/oder der Außenring kann einen ersten und zweiten Teilring umfassen. Eine Laufbahn des Innenrings und/oder Außenrings kann dabei als Rille gestaltet sein und kann insbesondere durch einen ersten und zweiten Teilring des Innenrings bzw. Außenrings gemeinsam gebildet sein. Nach Anspruch 4 sind unter Verzicht von Abstandskugeln alle Kugeln tragend ausgeführt, so dass ein besonders kleines Lager zum Einsatz kommen kann. Die Materialwahl nach den Ansprüchen 6 und 7 reduzieren den Verschleiß und ermöglichen zusätzlich eine Verringerung der Schmiermenge. Insbesondere ist die Reibung zwischen keramischen Kugeln deutlich geringer als zwischen Stahlkugeln. Als Nebeneffekt ermöglichen keramische Kugeln die Wahl eines kleinen Wälzlagers. Prinzipiell kann das Wälzlager mit einem flüssigen Schmiermittel geschmiert sein. Die vollkugelige Gestaltung bewirkt eine Verbesserung auch für fettgeschmierte Lagerungen. Der Verzicht auf den Käfig wirkt sich bei dem schmiermittelumlaufgeschmierten Wälzlager vorteilhaft beim Einsatz eines Schmiermittels nach Anspruch 9 aus, beispielsweise eines Perfluorpolyethers. Eine konische Oberfläche nach Anspruch 1 führt in einem käfiglosen Wälzlager zu einer besonders guten Schmiermittelversorgung, wodurch die Schmiermittelmenge stärker reduziert werden kann.

Das Wälzlager ist vorzugsweise dazu ausgebildet, den Rotor während des normalen und insbesondere dauerhaften Betriebs der Vakuumpumpe drehbar zu unterstützen und steht deshalb vorzugsweise fest mit dem Gehäuse der Pumpe einerseits und dem Rotor andererseits in Eingriff bzw. ist mit dem Gehäuse und dem Rotor jeweils fest verbunden. Beispielsweise kann der Außenring des Wälzlagers mit in einer Lagerfassung gehaltert sein, welche ihrerseits im Gehäuse gehaltert ist. Der Innenring des Wälzlagers oder insbesondere zwei Teilringe des Innenrings des Wälzlagers können auf dem Rotor bzw. insbesondere auf einer Welle des Rotors angeordnet sein.

An Hand eines Ausführungsbeispiels und seiner Weiterbildungen soll die Erfindung näher erläutert und die Darstellung ihrer Vorteile vertieft werden. Es zeigen:
- Fig. 1:: Schnitt durch eine Vakuumpumpe mit Wälzlager;
- Fig. 2:: Schematische Darstellung des Kugelkreises, Teilkreises und der Laufbahnen;
- Fig. 3:: Teilschnitt durch den Lagerbereich mit Wälzlager einer Vakuumpumpe.

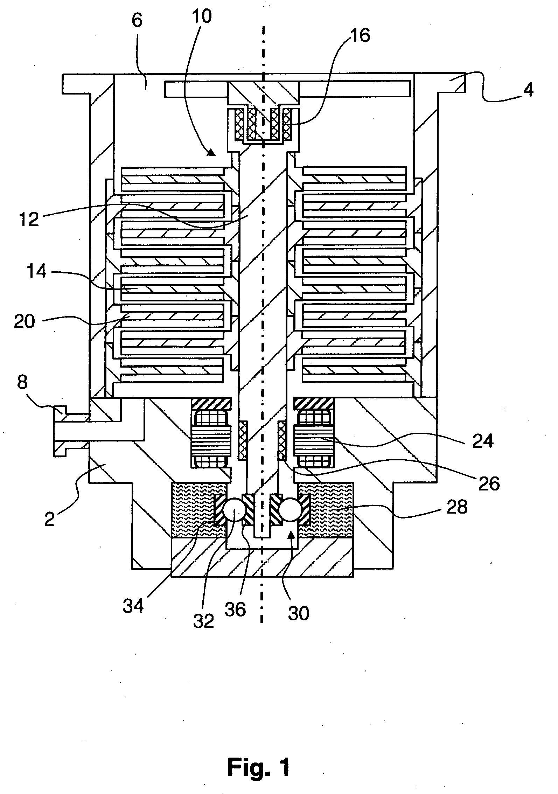

Die Erfindung wird im Folgenden am Beispiel einer Vakuumpumpe turbomolekularer Bauart beschrieben. In Fig. 1 ist die Vakuumpumpe im Schnitt dargestellt. Das Gehäuse 2 der Vakuumpumpe besitzt einen Flansch 4, mit dem die Vakuumpumpe mit dem Flansch einer nicht dargestellten Kammer verbindbar ist. Der Flansch umgibt die Ansaugöffnung 6, durch welche die Vakuumpumpe Gas ansaugt. Durch einen Auslass 8 verlässt das verdichtete Gas die Vakuumpumpe.

In der Vakuumpumpe ist ein Rotor 10 angeordnet, der eine Welle 12 aufweist. Die Welle wird an zwei Punkten drehbar unterstützt. An einem Punkt befindet sich ein vollkugelig käfigloses Wälzlager 30 mit einem Außenring 34, einem Innenring 36 und zwischen den Ringen angeordneten Kugeln 32, am anderen Punkt kann ein Permanentlager 16 vorgesehen sein, welches vorteilhaft verschleißfrei ist und aufgrund der Freiheit von Schmiermittel im Hochvakuumbereich angeordnet sein kann. Der Außenring 34 des Wälzlagers ist in einer Lagerfassung 28 gehaltert, welche sich ihrerseits im Gehäuse 2 gehaltert ist. Die Lagerfassung 28 ist so ausgelegt, dass das Wälzlager 30 Schwingungen ausführen kann, diese jedoch gedämpft werden.

Auf dem Rotor 10 ist eine Rotorscheibe 14 turbomolekularer Bauart vorgesehen, die mit einer Statorscheibe 20 ebenfalls turbomolekularer Bauart zusammenwirkt und bei schneller Drehung des Rotors 10 eine Pumpwirkung erzeugt. Die schnelle Drehung, die zum Erreichen eines molekularen Pumpeffektes geeignet ist und im Bereich von einigen Zehntausend Umdrehungen in der Minute liegt, wird von einem Antrieb bewirkt. Dieser kann einen auf dem Rotor 10 befestigten Antriebsmagneten 26 und eine im Gehäuse 2 der Vakuumpumpe vorgesehene Antriebsspule 24 umfassen.

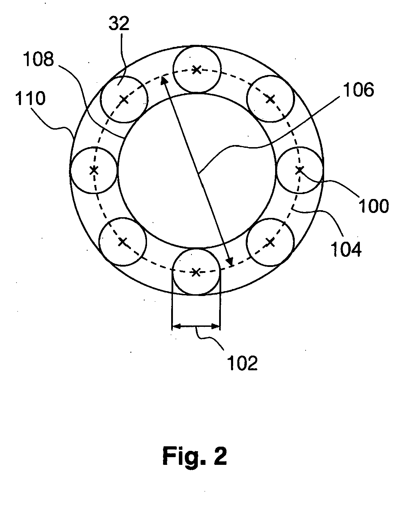

Der Aufbau des vollkugelig käfiglosen Wälzlagers soll mit Hilfe der schematischen Darstellung in Fig. 2 erläutert werden.

Dargestellt sind die innere Laufbahn 108, die sich am Innenring des Wälzlagers befindet, und die äußere Laufbahn 110, die am Außenring des Wälzlagers ausgebildet ist. Zwischen den Laufbahnen befinden sich die Kugeln 32, welche jeweils einen Kugelmittelpunkt 100 besitzen. Die Kugelmittelpunkte 100 liegen in guter Näherung auf einem Kreis, nämlich dem Teilkreis 104, welcher einen Teilkreisdurchmesser 106 und einen sich aus diesem ergebenden Umfang besitzt. Gezeigt sind tragende Kugeln 32, welche gleichzeitig auf innerer und äußerer Laufbahn 108, 110 abrollen. Die Summe der Kugeldurchmesser 102 der tragenden Kugeln 32 beträgt etwa das 0,85fache bis 0,97fache des Umfanges des Kreises 104, wobei die Darstellung in Fig. 2 diesbezüglich nicht maßstabsgetreu ist. Für diese Werte werden sehr gute Laufeigenschaften und Lebensdauern des Wälzlagers erreicht. Gemäß einer vorteilhaften Weiterbildung kann die Summe der Kugeldurchmesser 102 der tragenden Kugeln 32 etwa das 0,89fache bis 0,92fache des Umfanges betragen.

Die Lebensdauer kann weiter gesteigert werden, wenn wenigstens einer von Außenring und Innenring einen Stahl umfasst, der folgende Legierungselemente in Gewichtsprozenten enthält: Kohlenstoff 0,25 bis 0,35, Chrom 14 bis 16, Molybdän 0,85 bis 1,10 und Stickstoff 0,3 bis 0,5. Um weitere Verbesserungen seiner Eigenschaften zu erzielen, kann das Material zudem als Bestandteile in Gewichtsprozent enthalten: Silizium bis 1, Mangan bis 1 und Nickel bis 0,5.

Eine weitere Lebensdauersteigerung wird erreicht, wenn die tragenden Kugeln 32 keramisch ausgeführt werden. Vorteilhaft sind Kugeln 32, deren Material als Hauptbestandteil Siliziumnitrid (Si₃N₄) oder Zirkonoxid (ZrO₂) umfasst.

Es können alle Kugeln 32 tragend ausgeführt sein, so dass das Wälzlager eine hohe Last tragen kann. Dabei wird auf reibende und Verschleiß schaffende Bauelemente wie Käfig und Abstandskugeln verzichtet, wodurch ein kleines, langlebiges und für hohe Drehzahlen geeignetes Wälzlager geschaffen wird.

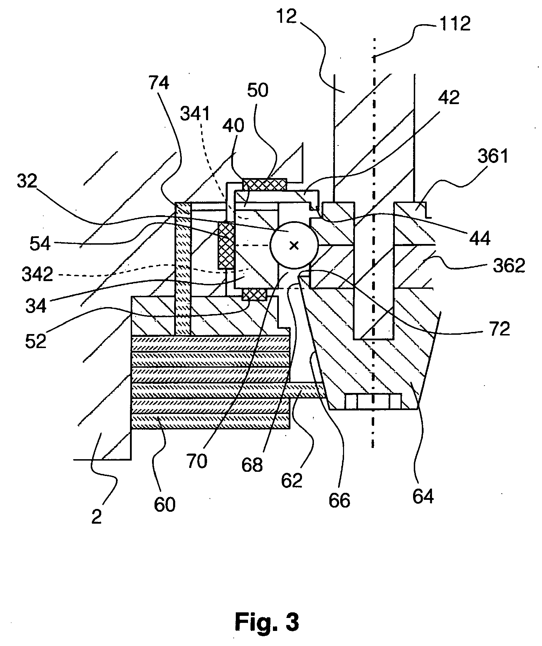

Weitere Gestaltungsmöglichkeiten sollen mit Hilfe der Schnittansicht in Fig. 3 erläutert werden. Dargestellt ist ein Ausschnitt des Bereichs mit Wälzlager und Lagerfassung.

Der Innenring des Wälzlagers ist zweiteilig mit einem ersten und zweiten Teilring 361 und 362 ausgeführt. Beide Teilringe 361, 362 sind auf der Welle 12 angeordnet. Die Teilung des Innenrings erfolgt vorteilhaft in einer Ebene senkrecht zur Drehachse 112, vorteilhaft derart, dass die Teilung in Höhe der Laufbahn liegt.

Alternativ oder zusätzlich zur Teilung des Innenrings kann der Außenring 34 geteilt ausgeführt sein und einen ersten und einen zweiten Teilring 341 und 342 aufweisen, wobei die Teilung vorzugsweise in Höhe der Laufbahn und in einer Ebene senkrecht zur Drehachse 112 liegt.

Die Teilung von Außenring 34 oder Innenring ermöglicht es, die Laufbahn als Rille auszuführen und gleichzeitig eine große Zahl von tragenden Kugeln 32 vorzusehen. Die Summe der Kugeldurchmesser der tragenden Kugeln 32 kann auf diese Weise etwa das 0,90fache bis 0,97fache des Umfanges des Teilkreises betragen.

Der Außenring 34 des Wälzlagers ist in einer Lagerfassung gehaltert, die im dargestellten Beispiel wie folgt ausgeführt ist: Zwischen Gehäuse 2 und Außenring 34 des Wälzlagers und mit beiden in berührendem mechanischem Kontakt sind Schwingelemente 50, 52 und 54 angeordnet. Diese Schwingelemente 50, 52 und 54 können auf einfache Weise als elastomere Ringe gestaltet sein. Die elastomeren Ringe schaffen eine Lagerfassung, in der das Wälzlager in axialer Richtung und radialer Richtung schwingfähig gehaltert ist, wobei die Schwingungen gedämpft werden.

Schmiermittel ist in einem Schmiermittelspeicher 60, der aus einem mehrlagigen filzartigen Werkstoff gefertigt sein kann, bevorratet und wird mittels einer Schmiermittelzufuhr 62, beispielsweise einer Zunge aus dem filzartigen Werkstoff, auf die Mutter 64 übertragen. Diese besitzt eine konische Oberfläche 66, deren Durchmesser zwischen dem Berührpunkt von Oberfläche 66 und Schmiermittelzufuhr 62 und dem Wälzlager zunimmt. Die konische Oberfläche 66 endet im Bereich des Wälzlagers derart, dass Schmiermittel in das Wälzlager hineingefördert wird.

Gemäß einer Gestaltungsmöglichkeit wird vorgeschlagen, ein reaktionsträges und für Temperaturen oberhalb von 90°C geeignetes Schmiermittel einzusetzen. Insbesondere ist ein Perfluorpolyether als solches Schmiermittel geeignet. Dieses Schmiermittel ist vorteilhaft beim Einsatz in Vakuumpumpen, da es hohe Temperaturen oberhalb von 90°C und sogar oberhalb von 110°C verträgt und reaktionsträge ist.

Gemäß der Erfindung besitzt die konische Oberfläche 66 einen Abschnitt 68 in dem Volumen 70, welches von Innenring und Außenring 34 des Wälzlagers begrenzt wird. Hierdurch wird eine besonders sichere Zufuhr in das Wälzlager gewährleistet. Eine weitere Verbesserung wird erreicht, wenn der Abschnitt 68 in einer Schleuderkante 72 endet, die eine gleichmäßige Verteilung des Schmiermittels bewirkt.

Eine nächste Weiterbildung schlägt vor, wenigstens einen Ablaufkanal 40 im Außenring 34 des Wälzlagers zu schaffen, durch den Schmiermittel den durch Innen- und Außenring 34 begrenzten Innenraum verlassen kann. Hierdurch wird ein Stau von Schmiermittel im Innenraum vermieden. Eine Schmiermittelrückführung 74 kann vorgesehen sein, um Schmiermittel vom Ablaufkanal zu übernehmen und zum Schmiermittelspeicher zurückzuführen. Diese Schmiermittelrückführung 74 kann vorteilhaft aus einem mittels Kapillarkräften fördernden Material gestaltet sein, so dass seine Förderwirkung bei allen Orientierungen der Vakuumpumpe bezüglich der Schwerkraftrichtung besteht.

Eine ändere Weiterbildung schlägt vor, den Außenring 34 auf der der konischen Oberfläche 66 abgewandten Seite mit einem ringförmigen Flansch 42 zu versehen, welcher das Volumen 70 zwischen Innenring und Außenring 34 weitgehend abdeckt. Ziel ist es, den Fluss von Schmiermittel entlang der Welle 12 stark zu reduzieren. Dies kann durch einen Dichtkragen 44 zusätzlich verbessert werden, der an dem radial inneren Rand des Flansches 42 vorgesehen ist und sich in den Zwischenraum zwischen Innenring und Außenring 34 erstreckt. Besonders eng kann der Spalt zwischen Dichtkragen 44 und Innenring gewählt werden, wenn der Innenring. mehrteilig ausgeführt ist, da dann bei Dimensionierung des Spaltes nicht auf die Montierbarkeit des Wälzlagers, insbesondere auf die Befüllbarkeit, geachtet werden muss.

## Patentansprüche

1. Vakuumpumpe mit einem insbesondere schnell drehenden Rotor (10) und einem Wälzlager (30), welches den Rotor (10) drehbar unterstützt und Wälzkörper (32) umfasst, die einen Kugeldurchmesser (102) besitzen und deren Kugelmittelpunkte (100) auf einem Teilkreis (104) mit einem Umfang liegen, wobei die Vakuumpumpe eine Schmiermittelumlaufschmierung zur Versorgung des Wälzlagers (30) mit Schmiermittel umfasst, die ein Bauteil (64) mit einer konischen Oberfläche (66) umfasst, welche einen Abschnitt (68) aufweist, der in einem Volumen (70) zwischen einem Innenring (36) und einem Außenring (34) des Wälzlagers (30) angeordnet ist,
**dadurch gekennzeichnet, dass** das Wälzlager (30) vollkugelig käfiglos ausgeführt ist und die Summe der Kugeldurchmesser (102) der tragenden Kugeln etwa das 0,85fache bis 0,97fache des Umfanges beträgt.

2. Vakuumpumpe nach Anspruch 1, **dadurch gekennzeichnet, dass** das Wälzlager einen Innenring (36) mit einem ersten Teilring (361) und einem zweiten Teilring (362) umfasst.

3. Vakuumpumpe nach Anspruch 2, **dadurch gekennzeichnet, dass** eine Laufbahn (108) des Innenrings (36) als Rille gestaltet ist und sich die Rille über ersten (361) und zweiten (362) Teilring erstreckt.

4. Vakuumpumpe nach einem der vorhergehenden Ansprüche, **dadurch gekennzeichnet, dass** alle Kugeln Tragkugeln sind.

5. Vakuumpumpe nach einem der vorhergehenden Ansprüche, **dadurch gekennzeichnet, dass** das Wälzlager einen Außenring (34) mit einem ersten Teilring (341) und einem zweiten Teilring (342) umfasst.

6. Vakuumpumpe nach einem der vorhergehenden Ansprüche, **dadurch gekennzeichnet, dass** wenigstens einer von Außenring (34) und Innenring (36) einen Stahl mit folgenden Legierungselementen in Gewichtsprozenten enthält: Kohlenstoff 0,25 bis 0,35, Chrom 14 bis 16, Molybdän 0,85 bis 1,10 und Stickstoff 0,3 bis 0,5.

7. Vakuumpumpe nach einem der vorhergehenden Ansprüche, **dadurch gekennzeichnet, dass** die tragenden Kugeln keramisch sind.

8. Vakuumpumpe mit einem Wälzlager (30) nach einem der vorhergehenden Ansprüche, wobei die Vakuumpumpe als Turbomolekularpumpe ausgebildet ist.

9. Vakuumpumpe nach einem der vorhergehenden Ansprüche, **dadurch gekennzeichnet, dass** das Schmiermittel reaktionsträge und/oder für Temperaturen oberhalb von 90°C geeignet ist.

## Claims

1. A vacuum pump having a rotor (10), in particular a fast-rotating rotor, and a roller element bearing (30) which rotatably supports the rotor (10) and comprises roller bodies (32) which have a ball diameter (102) and whose ball centers (100) lie on a part circle (104) with a periphery, wherein the vacuum pump comprises a lubricant circulation lubrication for supplying the roller element bearing (30) with lubricant, said lubricant circulation lubrication comprising a component (64) having a conical surface (66) which has a section (68) which is arranged in a volume (70) between an inner ring (36) and an outer ring (34) of the roller element bearing (30), **characterized in that** the roller element bearing (30) is designed as fully spherical without a cage and the sum of the ball diameters (102) of the supporting balls amounts to approximately 0.85 times to 0.97 times the periphery.

2. A vacuum pump in accordance with claim 1, **characterized in that** the roller element bearing comprises an inner ring (36) having a first part ring (361) and a second part ring (362).

3. A vacuum pump in accordance with claim 2, **characterized in that** a race (108) of the inner ring (36) is designed as a groove and the groove extends over first (361) and second (362) part rings.

4. A vacuum pump in accordance with any one of the preceding claims, **characterized in that** all the balls are load-bearing balls.

5. A vacuum pump in accordance with any one of the preceding claims, **characterized in that** the roller element bearing comprises an outer ring (34) having a first part ring (341) and a second part ring (342).

6. A vacuum pump in accordance with any one of the preceding claims, **characterized in that** at least one of the outer ring (34) and the inner ring (36) contains a steel having the following alloy elements in weight percent: carbon 0.25 to 0.35, chromium 14 to 16, molybdenum 0.85 to 1.10 and nitrogen 0.3 to 0.5.

7. A vacuum pump in accordance with any one of the preceding claims, **characterized in that** the supporting balls are ceramic.

8. A vacuum pump having a roller element bearing (30) in accordance with any one of the preceding claims, wherein the vacuum pump is configured as a turbomolecular pump.

9. A vacuum pump in accordance with any one of the preceding claims, **characterized in that** the lubricant is sluggish in reaction and/or is suitable for temperatures above 90°C.

## Revendications

1. Pompe à vide comprenant un rotor (10) en rotation particulièrement rapide et un palier à roulements (30) qui soutient le rotor (10) en rotation et comprend des corps de roulement (32) qui possèdent un diamètre sphérique (102) et dont les centres (100) sont situés sur un cercle partiel (104) avec une circonférence, dans laquelle la pompe à vide inclut une lubrification par recirculation de lubrifiant pour l'alimentation du palier à roulements (30) avec du lubrifiant, qui inclut un composant (64) avec une surface conique (66), laquelle comprend un tronçon (68) agencé dans un volume (70) entre une bague intérieure (36) et une bague extérieure (34) du palier à roulements (30), **caractérisée en ce que** le palier à roulements (30) est réalisé avec des billes pleines et sans cage, et la somme des diamètres (102) des billes portantes s'élève environ à 0,85 fois à 0,97 fois la circonférence.

2. Pompe à vide selon la revendication 1, **caractérisée en ce que** le palier à roulements inclut une bague intérieure (36) avec une première bague partielle (361) et une seconde bague partielle (362).

3. Pompe à vide selon la revendication 2, **caractérisée en ce qu'**une piste de roulement (108) de la bague intérieure (36) est conçue sous la forme d'une rainure, et **en ce que** la rainure s'étend sur la première (361) et la seconde (362) bague partielle.

4. Pompe à vide selon l'une des revendications précédentes, **caractérisée en ce que** toutes les billes sont des billes portantes.

5. Pompe à vide selon l'une des revendications précédentes, **caractérisée en ce que** le palier à roulements inclut une bague extérieure (34) avec une première bague partielle (341) et une seconde bague partielle (342).

6. Pompe à vide selon l'une des revendications précédentes, **caractérisée en ce que** l'une au moins parmi la bague extérieure (34) et la bague intérieure (36) contient un acier avec les éléments d'alliages suivants, en pourcentage pondéral : carbone 0,25 à 0,35, chrome 14 à 16, molybdène 0,85 à 1,10, et azote 0,3 à 0,5.

7. Pompe à vide selon l'une des revendications précédentes, **caractérisée en ce que** les billes portantes sont en céramique.

8. Pompe à vide avec un palier à roulements (30) selon l'une des revendications précédentes, dans laquelle la pompe à vide est réalisée sous forme de pompe turbomoléculaire.

9. Pompe à vide selon l'une des revendications précédentes, **caractérisée en ce que** le lubrifiant est inerte vis-à-vis des réactions et/ou approprié pour des températures au-dessus de 90° C.
